# EUROPEAN PATENT SPECIFICATION

(11) **EP 0 503 788 B1**
(45) Date of publication and mention of the grant of the patent: **30.11.1994**
(21) Application number: 92301505.1
(22) Date of filing: 24.02.1992
(51) Int. Cl.: B65G 7/06, B65D 19/40

(54) **Load transfer pallet or platform**
Palette bzw. Ladeplatte zur Beförderung von Lasten
Palette ou plate-forme de transfert de charge

(30) Priority: 14.03.1991 GB 9105397
(43) Date of publication of application: 16.09.1992
(73) Proprietor: Goom, Noel Joseph, The Beeches, Nantwich, Cheshire CW5 5YP (GB)
(72) Inventor: Goom, Noel Joseph, The Beeches, Nantwich, Cheshire CW5 5YP (GB)

(56) References cited:
- DE-A- 1 946 690
- US-A- 3 247 921
- US-A- 3 392 800

## Description

This invention relates to air cushion supported pallets or platforms used for transferring loads from one position to another position or from one surface to another surface, whereby the surfaces may relate to the ground, the carrying surfaces of road vehicles, railway trucks, coaches , wagons, aircraft or sea going vessels according to the preamble of claim 1.

Wooden pallets of very simple construction are in common use as an aid to loading and unloading motor vehicles, and moving loads in factories and buildings. They improve the speed of handling because they enable items to be moved in larger numbers stacked loosely on the pallets. The pallets are handled by fork lift trucks which can be of any size. The pallets can be of any size but in practice their size has been limited to around 1200mm x 900mm with a weight limit of around one tonne. The limits have been established by a combination of circumstances but significantly by the inability of fork lift trucks to carry large loads eccentrically without exceptional balancing weight in the fork lift truck, and a consequent doubling of the total weight of truck and load.

The cost of manufacturing the pallets significantly affects, their use in transporting goods. If the cost of returning the pallet to the sender is prohibitive then their cost must be included in the cost of transportation and if, as a consequence of the "single market" in 1992, the length of journey increases then the cost of returning them must increase. It follows therefore that the cost must be kept to a minimum.

The handling of loads to be transported overseas can similarly be speeded up by transferring goods in larger numbers, but because of the necessity to transfer the loads from one mode of transport to another, i.e. from the road vehicle which is the means of distribution, to the railway, or to the ship, or the both, heavy containers are required. The use of containers is also necessary for the transport of small items by rail and air. Very heavy and specialised lifting gear is required to handle containers and the cost of returning them, possibly empty, its very expensive.

An object of this invention is to provide an improved and more economical means of transferring loads between road and railway vehicles and between other means of transport and within factories by providing a modified pallet construction incorporating air cushions.

A further object of the invention is to provide a means of transferring loads substantially larger and heavier than the limits imposed by the use of existing pallets and fork lift trucks, by providing a pallet constructed in a similar manner and of similar materials to those pallets presently in use but supported on a plurality of air cushions. They would be moved and manipulated by vehicles which may be fork lift trucks similar in size and equipment to those used for existing pallets, whereby they would retain the ability to handle the modified pallets as well as existing pallets, but may also be some other form of tractor, equipped with a means of supplying air to the pallet at a pressure greater than atmospheric pressure for the purpose of raising and maintaining the pressure of the air in the plenum chambers. The modified pallets would have the advantage of the greater manoeuvrability inherent in the use of air cushions.

Air cushion devices to assist the movement of loaded pallets have already been suggested but their use has been restricted to specialised circumstances and situations without the benefit of the economy of construction , facilities for stability control, and the quick and easy connection to the air supply and propulsive unit, provided by this invention.

A characteristic of air cushion pallets is the difficulties encountered in dealing with asymmetrical loading of the pallet. This becomes more significant as the size of the pallet increases.

Earlier air cushion pallets are, in general, provided with both primary and secondary air chambers. More particularly such pallets are provided with a primary plenum chamber peripheral to and containing air at a greater pressure than that in the secondary plenum chamber. The primary chamber, in the form of a torus, acts in the manner of a skirt to contain the air within the secondary chamber and offers resistance to the imbalance caused by the asymmetrical loading of the pallet as a consequence of the greater pressure of the air in the primary chamber to that in the secondary chamber. To achieve stability by means of primary and secondary chambers the air cushion supported load carrying platforms need to have on their underside a plurality of diaphragms which define the cushions of pressurised air by which the platform is supported. Each diaphragm defines a first chamber between the diaphragm and the platform and a second chamber, or cushion area, between the diaphragm and the surface over which the platform is operating. Both chambers may be inflated from the same source. The construction of air cushion supported pallets incorporating primary and secondary chambers, as described, is more complicated and thus more expensive than the single chambers as provide by this invention and could be prohibitive if they were to be incorporated into pallets which were to be non-returnable.

Air cushion supported load bearing platforms with primary and secondary chambers are described in GB2092084A, GB1551715A, GB1243212A, GB1258243A, GB1210261A, and US3161247.
In the present invention control of asymmetrical loading is achieved by providing air, which may be from a single source, to a plurality of independent air cushions, whereby the pressure of air in each cushion may be separately controlled.
According to this invention I provide a pallet or platform for transferring loads from one position to another position, or from one surface to another surface, whereby the surfaces may relate to the ground, the carrying surfaces of road vehicles, railway trucks, coaches , wagons, aircraft or sea going vessels, comprising a rigid sheet upon which the load is carried, beams or tubular members attached to the underside of the rigid sheet, characterised in that the beams or tubular members are so arranged as to form, in part, a plurality of plenum chambers beneath the rigid sheet, each plenum chamber having a perimeter defined by a flexible skirt releasible attached to the lower edge of the inner faces of the supporting beams or tubular members and upper and lower surfaces defined by the underside of the rigid sheet and the surface over which the pallet is operating, each plenum chamber being capable of independently receiving and containing within the chamber, compressed air, from a source of air, at a pressure greater than atmospheric pressure, located externally of the pallet so that are independent air cushion can be formed in each plenum chamber to provide support for any load carried on the rigid sheet.

A modification of this invention provides supporting beams or tubular members so arranged beneath the load bearing rigid sheet as to form a duct or ducts, within their own depth, for the containment of the air supply to the plenum chambers and the means of regulating the volume of air to each of the plenum chambers. The load carrying rigid sheet and supporting beams or tubular members may be constructed of timber, plastic, metal, or other suitable materials.

To assist in the propulsion and guidance of the of the air cushion supported load carrying pallet, quick release attachments may be provided on the pallet to secure the pallet to the fork lift truck or other means of transport, such attachments may also incorporate the means of supplying pressurised air from a compressor on the vehicle to the air cushions supporting the pallet.

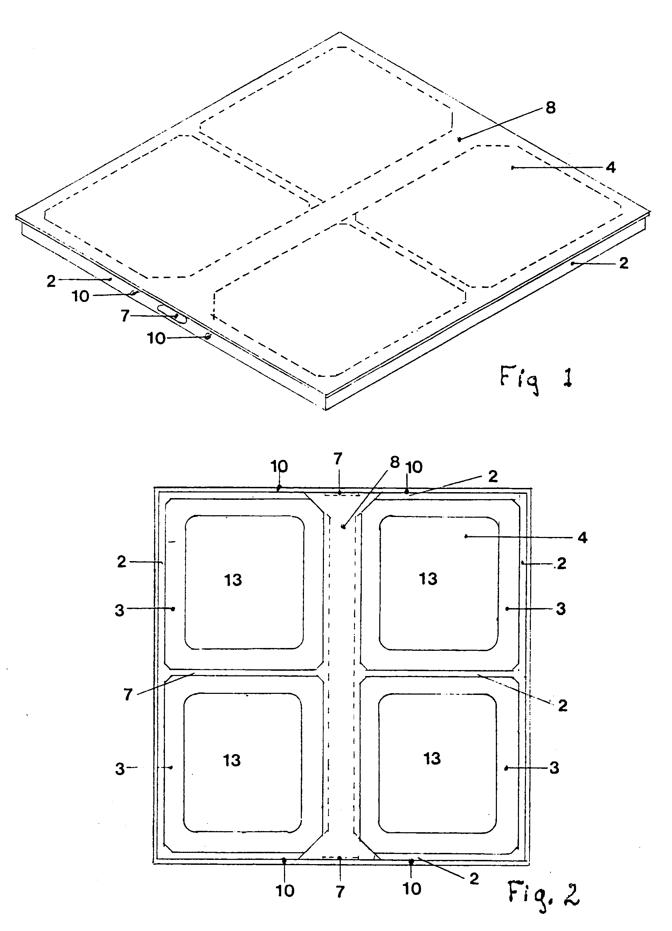

A specific embodiment of the invention will now be described by may of example with reference to the accompanying drawings in which:-
Figure 1 shows an isometric sketch of the invention in the form of an open platform.
Figure 2 shows a plan of the underside of the invention.

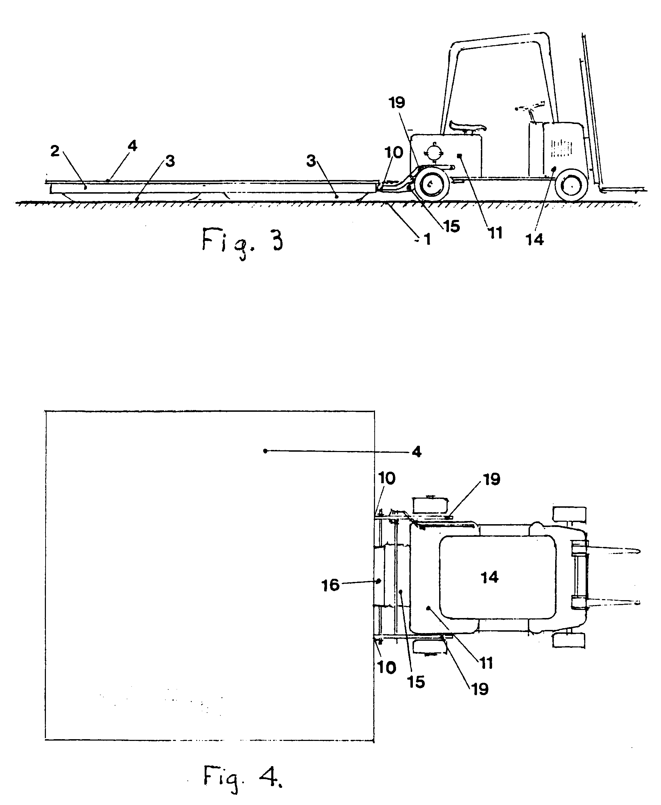

Figure 3 shows a side elevation of the invention attacked to a fork lift truck upon which a fan compressor has been mounted.
Figure 4 shows in plan the method of attachment of the invention to a fork lift truck.
Figure 5 shows, in part section, and to a larger scale, a cross section through the invention showing an example of the air duct, and a method of attaching the skirt to the internal faces of the supporting beams.
Figure 6 shows, in cross section, a method of attaching the air supply to the invention.
Figure 7 shows, in plan view, a method of attaching the invention to the propulsive vehicle, and a method of attaching the air supply.

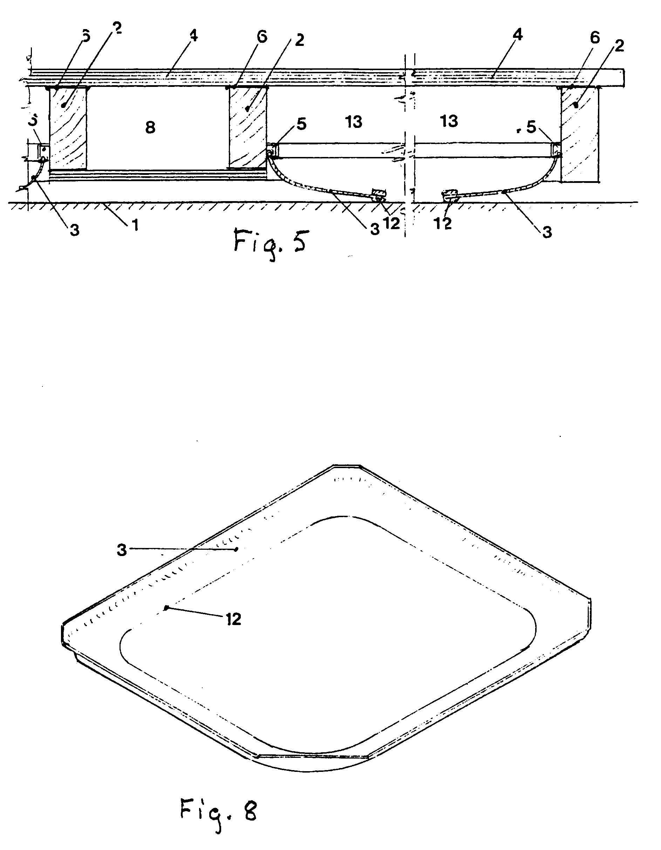

Figure 8 shows in an isometric view, a typical shape for a renewable skirt which is attached to the inner faces of the supporting beams forming one of the plenum chambers.
Figure 9 shows a section through the invention where tubular sections are used to form supporting members attached to the under side of the load carrying rigid sheet.

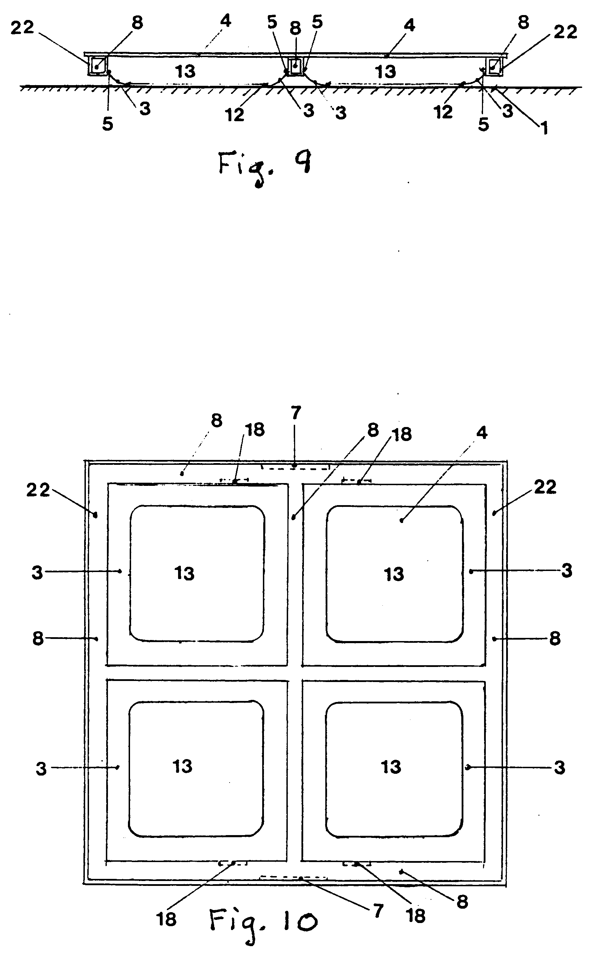

Figure 10 shows a plan view of the underside of the invention where tubular members are used to form the supporting members.

Although various embodiments are described herein and illustrated in the drawings, the invention in not to be considered as limited thereto, and modifications can be made which are within the scope of the appended claims. For example the air cushion pallet as above described may have a permanently or temporarily mounted container attached thereto. The container may have means for creating cold storage. The pallet may have a framework superimpose upon it to support a waterproof covering. The means of inflating the cushions may be be some other gas or fluid.

Referring to the drawings, the invention comprises a platform in the form of supporting beams 2 supporting a rigid sheet 4 which may be manufactured in timber or other material. The rigid sheet 4 may be reinforced as necessary to support the loads it is designed to carry. The supporting beams 2 and rigid sheet 4 may be manufactured in timber but may also be made of metal, plastic, or other material. The rigid sheet 4 is permanently secured to the supporting beams 2 with air tight joints 6.

Apertures are provided on one or more sides 7, to permit the entry of air at a pressure greater than atmospheric pressure, into the air supply duct or ducts 8. The entry or entries are fitted with self sealing flap valves 9 to maintain the pressure in the duct or ducts when another entry point is being used .

Attachment points 10 are used to secure the fork lift truck to the pallet.

The air cushions are contained in the plenum chambers 13 formed between the underside of the rigid sheet 4, the beams 2, the flexible skirt 3, and the supporting surface 1.

A renewable flexible skirt 3, defining each plenum chamber 13, is attached to the inner faces of the supporting beams 2, at the lower edge of the beams 2 , by means of a continuous clamp 5. The flexible skirt 3, is forced against the supporting surface 1, by the pressure of air in the plenum chambers 13, and an air cushion is formed in each chamber thus supporting the load carrying pallet. An abraision resistant strip 12, is attached to the flexible skirt 3, along the edge next to the supporting surface 1.

An external source of air under pressure is required and some external means of propulsion and directional control are required for the operation of a loaded pallet. In the example shown in the drawings, the external requirements are provide by a fork lift truck 14 on which in mounted a fan compressor 11.

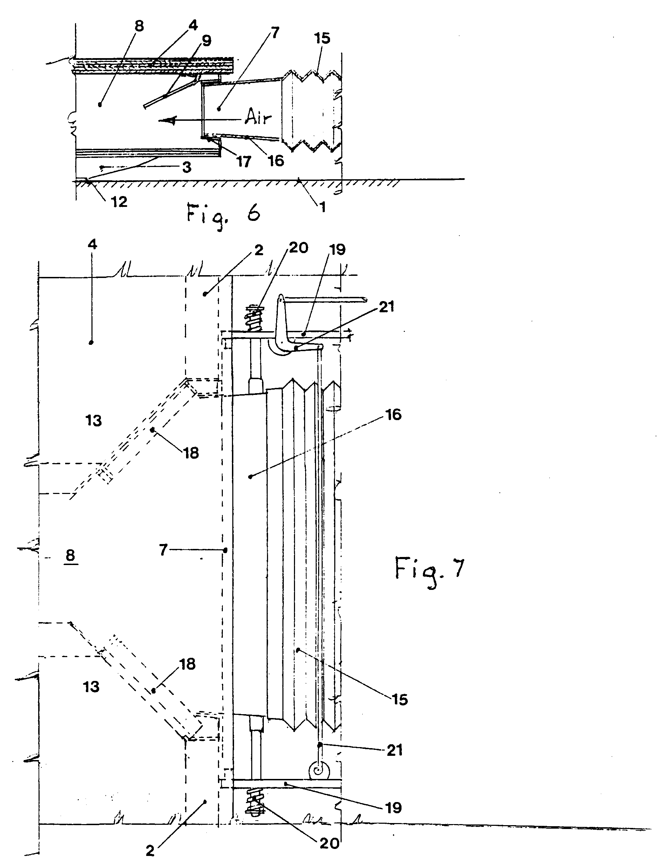

The attachment used to connect the air supply to the pallet is shown in Figure 7, where air under pressure enters from the external supply 11, through the flexible connection 15, into a tapered tube 16, which is matched in shape and taper, concentrically, by a similar tube 17, attached to and forming the entry to the duct 8, supplying air to the plenum chambers 13. A releasable locking device secures the connection whilst the pallet is being moved.

A control device 18, in the form of a blind or shutter, capable of adjustment from outside the duct and whilst the pallet is loaded, is fitted between the air supply duct or ducts,and each plenum chamber whereby the volume of air supplied to each plenum chamber can be separately controlled, thus enabling the pallet to be balanced when eccentric loads are being carried.

Two arms 19, attached to the fork lift truck and arranged to pivot in a vertical plane, and to a limited extent in the horizontal plane, can be widened horizontally against the pressure of two springs 20, by a system of levers 21, or by hydraulic means, to engage, when released, with the attachment points 10, on the pallet. The arms 19, can be raised or lowered individually, or collectively, when required, by mechanical or hydraulic means, to facilitate the engagement of the air supply 16, and the connecting arms 18.

## Claims

1. A pallet or platform for transferring loads from one position to another position, or from one surface to another surface, whereby the surfaces may relate to the ground, the carrying surfaces of road vehicles, railway trucks, coaches, waggons, aircraft, or sea going vessels, comprising a rigid sheet(4) upon which the load is carried, and beams(2) or tubular members(22) attached to the underside of the rigid sheet(4), characterised in that the beams(2) or tubular members(22) are so arranged as to form, in part, a plurality of plenum chambers(13) beneath the rigid sheet(4), each plenum chamber having a perimeter defined by a flexible skirt(3) releasibly attached to the lower edge of the inner faces of the supporting beams(2) or tubular members(22) and upper and lower surfaces defined by the underside of the rigid sheet(4) and the surface(1) over which the pallet is operating, each plenum chamber being capable of independently receiving and containing within the chamber, compressed air, from an external source of air located externally of the pallet, and at a pressure greater than atmospheric pressure, so that an air cushion can be formed in each plenum chamber to provide support for any load carried on the rigid sheet.

2. An air cushion supported load carrying pallet or platform as described in Claim 1, with a plurality of plenum chambers attached to the underside of the load carrying rigid sheet, each plenum chamber being defined by flexible skirts of plastic or rubberised or other suitable material, releasably attached to the supporting beams or tubular members attached to the underside of the load carrying rigid sheet and so arranged that the supporting beams or tubular members form, within their depth or otherwise, a duct or ducts for the containment of the pressurised air supply to the plenum chambers.

3. An air cushion supported load carrying pallet or platform as described in Claims 1 and 2 with a device or devices for separately controlling the volume of air flowing from a single external source to each of the plenum chambers, each device consisting of a small roller blind or other suitable moveable type of control, arranged to variably control the area of the aperture through which the air enters the plenum chamber, with means being provided for the device to be operated whilst the pallet is loaded and covered with goods or materials to be transferred, thus facilitating the alignment of the pallet or platform with the supporting surface over which the pallet is operating, by the separate control of the volume of air flowing to each of the plenum chambers.

4. A pallet or platform as claimed in any of the previous claims, wherein air under pressure, supplied from an external source, can enter the air supply ducts contained within the supporting beams or tubular members attached to the underside of the load bearing rigid sheet through one or more tube orifices, each tapered along the line of entry such that the tube bringing the air under pressure from an external source, is similarly tapered concentrically with the entry tube , and will mate with the entry tube and be held in position by a releasable locking device whilst the load is being moved.

5. A pallet or platform as claimed in any one of the previous Claims, with attachments located on the pallet in association with the air entry tubes , whereby a fork lift truck or similar tractor, may be releasably attached to the pallet or platform for the purpose of guiding and propelling the pallet or platform from point to point or surface to surface.

6. A pallet or platform as claimed in any one of the proceeding Claims, provided with flexible skirts in sheet form, of reinforced plastic or rubberised, or other suitable material, with their outer perimeters being so shaped as to lie concentrically within the inner faces of the supporting beams or tubular members forming each plenum chamber and having its outer perimeter attached to the beams or tubular members , and an inner edge formed with a narrow strip of abrasive resistant material defining such area of the reactive surface over which the pallet is being moved as will for the time being form part of the plenum chamber.

7. A pallet or platform as claimed in any preceding claim, upon which is mounted a framework for the purpose of supporting a waterproof cover to protect the load whilst in transit.

8. A pallet or platform as claimed in any preceding claim, upon which is mounted a rigid container for the secure protection of the goods in transit.

9. A pallet or platform as claimed in any preceding claim, upon which is mounted a refrigerated container or insulated container for the transport of chilled or frozen food.

10. A pallet or platform as claimed in any preceding claim with a combined attachment for connecting it with the external supply of pressurised air, and the means of guidance and propulsion, whereby both connections may be made from a remote position.

## Patentansprüche

1. Pallette oder Plattform zum Transfer von Lasten von einer Position zu einer anderen Position oder von einer Fläche zu einer anderen Fläche, wobei die Flächen Verbindung zum Boden haben können, wobei die tragenden Flächen von Straßenfahrzeugen, Eisenbahnfahrzeugen, Reisezugwagen, Waggons, Flugzeugen oder Seeschiffen eine starre Platte (4), auf der die Last getragen wird und Balken (2) oder rohrförmige Elemente (22) beinhalten, die an der Unterseite der starren Platte (4) befestigt sind, dadurch gekennzeichnet, daß die Balken (2) oder rohrförmigen Elemente (22) so angeordnet sind, daß sie, in Teilen, eine Vielzahl von Luftsammelkammern (13) unter der starren Platte (4) bilden, wobei jede Sammelkammer eine äußere Begrenzung hat, die von einem flexiblen Rand (3) begrenzt wird, der abnehmbar an der Unterkante der Innenseiten der Tragebalken (2) oder der rohrförmigen Elemente (22) befestigt ist und obere und untere Flächen, die durch die Unterseite der starren Platte (4) und durch die Fläche (1) über welche die Pallette arbeitet, begrenzt sind, wobei jede Sammelkammer in der Lage ist, unabhängig Druckluft in der Kammer aufzunehmen und zu behalten, wobei die Druckluft aus einer externen Luftquelle, die außerhalb der Pallette platziert ist, stammt und einen Druck hat, der größer ist als der atmosphärische Druck, so daß in jeder Sammelkammer ein Luftkissen gebildet werden kann, um für jedwede Last, die auf der starren Platte getragen wird, eine Unterlage zu schaffen.

2. Luftkissengelagerte, lasttragende Pallette oder Plattform wie in Anspruch 1 beschrieben mit einer Vielzahl von Sammelkammern, die an der Unterseite der lasttragenden starren Platte befestigt sind, wobei jede Sammelkammer durch flexible Ränder aus Kunststoff oder gummiertem Material oder aus einem anderen geeigneten Material begrenzt wird, das abnehmbar an dem Tragebalken oder den rohrförmigen Elementen der lasttragenden starren Platte befestigt ist, und so angeordnet ist, daß die Tragebalken oder rohrförmigen Elemente innerhalb ihrer Tiefe oder auf andere Art, einen Kanal oder Kanäle zur Einschließung der Druckluftversorgung zu den Sammelkammern bilden.

3. Luftkissengelagerte, lasttragende Pallette oder Plattform wie in den Ansprüchen 1 und 2 beschrieben mit einer Vorrichtung oder mit Vorrichtungen zur getrennten Regelung des Luftvolumens, das von einer einzigen externen Quelle zu jeder der Sammelkammern fließt, wobei sich jede Vorrichtung aus einem kleinen Rolladen oder einem anderen geeigneten beweglichen Typ einer Regelung zusammensetzt, die so angeordnet ist, daß die Fläche der Öffnung, durch die die Luft in die Sammelkammern eintritt, variabel geregelt werden kann, mit Mitteln, die geschaffen wurden, damit die Vorrichtung betätigt werden kann, während die Pallette beladen und mit Waren oder Materialien, die transferiert werden sollen, bedeckt wird, und so die Fluchtung der Pallette oder Plattform mit der tragenden Fläche, über welcher die Pallette arbeitet, durch die getrennte Regelung des zu jeder der Sammelkammern fließenden Luftvolumens erleichtert.

4. Pallette oder Plattform nach einem der vorstehenden Ansprüche, wobei unter Druck stehende Luft, die aus einer externen Quelle den Luftversorgungskanälen zugeführt wird, die in den Tragebalken oder den rohrförmigen Elementen enthalten sind, die an der Unterseite der lastlagernden starren Platte befestigt sind, durch eine oder mehrere Leitungsöffnungen eintreten kann, die sich jeweils entlang der Eintrittslinie verjüngen, so daß die Leitung, die die Luft von der externen Quelle bringt, sich gleichermaßen konzentrisch mit dem Eintrittsleitung verjüngt und mit der Eintrittsleitung zusammenpaßt und von einer abnehmbaren Schließvorrichtung in Position gehalten wird, während die Last bewegt wird.

5. Pallette oder Plattform nach einem der vorstehenden Ansprüche mit Halterungen, die an der Pallette in Verbindung mit den Lufteinlaßleitungen gelegen sind, wodurch ein Gabelstaplerwagen oder ein ähnlicher Schlepper abnehmbar an der Palette oder Plattform befestigt werden kann, zum Zwecke des Führens oder Vorwärtstreibens der Pallette oder der Plattform von Ort zu Ort, oder von Fläche zu Fläche.

6. Pallette oder Plattform nach einem der vorstehenden Ansprüche, versehen mit flexiblen Rändern in Plattenform aus verstärktem Kunststoff oder gummiert, oder aus einem anderen geeigneten Material, deren äußere Begrenzungen so gestaltet sind, daß sie konzentrisch in den Innenflächen der Tragebalken oder rohrförmigen Elemente liegen, die jede Sammelkammer bilden und dessen äußere Begrenzung an den Balken oder rohrförmigen Elementen befestigt ist, und die ein inneres Ende hat, das mit einem schmalen Streifen eines abriebfesten Materials ausgeformt ist, welches eine solche Fläche der reagierenden Oberfläche, über welche die Pallette bewegt wird und die zu diesem Zeitpunkt einen Teil der Sammelkammer bildet, begrenzt.

7. Pallette oder Plattform nach einem der vorstehenden Ansprüche, auf welcher ein Gerüst zum Zwecke des Tragens einer wasserfesten Abdeckung aufgebaut wird, um die Last während des Transportes zu schützen.

8. Pallette oder Plattform nach einem der vorstehenden Ansprüche, auf welcher ein starrer Behälter zum sicheren Schutz der Waren während des Transportes aufgebaut wird.

9. Pallette oder Plattform nach einem der vorstehenden Ansprüche, auf welcher ein gekühlter Behälter oder ein isolierter Behälter zum Transport von tiefgekühlen oder gefrorenen Lebensmitteln aufgebaut ist.

10. Kombinierte Halterung zum Anschluß an eine Pallette oder Plattform nach einem der vorstehenden Ansprüche, mit einer externen Druckluftversorgung, und Mitteln zur Führung und Vorwärtsbewegung, wobei beide Anschlüsse von einer entfernten Position aus erfolgen können.

## Revendications

1. Palette ou plateforme destinée à transférer des charges d'une position à une autre, ou d'une surface à une autre, les surfaces pouvant être apparentées au sol, aux surfaces de transport de véhicules routiers, de wagons à marchandises, d'autobus, de wagons, d'avions ou de navires maritimes, comprenant une plaque rigide (4) sur laquelle la charge est transportée, et des poutres (2) ou éléments tubulaires (22) fixés sur la partie inférieure de la plaque rigide (4), caractérisée en ce que les poutres (2) ou les éléments tubulaires (22) sont disposés de manière à former, en partie, plusieurs collecteurs d'air (13) sous la plaque rigide (4), chaque collecteur d'air présentant un périmètre défini par une collerette flexible (3) fixée de manière amovible à l'arête inférieure des faces internes des poutres de support (2) ou des éléments tubulaires (22), et des surfaces supérieure et inférieure définies par la partie inférieure de la plaque rigide (4) et la surface (1) par dessus laquelle la palette fonctionne, chaque collecteur d'air pouvant indépendamment recevoir et contenir à l'intérieur du collecteur de l'air comprimé depuis une source externe d'air placée à l'extérieur de la palette, à une pression supérieure à la pression atmosphérique, de sorte qu'un coussin d'air peut être formé dans chaque collecteur d'air de manière à fournir un support pour toute charge transportée sur la plaque rigide.

2. Palette ou plateforme transportant une charge supportée sur coussin d'air selon la revendication 1, présentant plusieurs collecteurs d'air fixés à la partie inférieure de la plaque transportant la charge, chaque collecteur d'air étant défini par des collerettes flexibles en plastique, en caoutchouc ou toute autre matière adaptée, fixé de manière amovible aux poutres de support ou aux éléments tubulaires fixés sur la partie inférieure de la plaque rigide de transport de la charge et disposé de manière à ce que les poutres de support ou les éléments tubulaires forment, à l'intérieur de leur profondeur ou autrement, un ou des conduits destinés à contenir de l'air sous pression alimentant les collecteurs d'air.

3. Palette ou plateforme transportant une charge supportée sur coussin d'air selon les revendications 1 et 2, présentant un ou plusieurs dispositifs destinés à commander de manière séparée le volume d'air qui s'écoule depuis une source externe unique vers chacun des collecteurs d'air, chaque dispositif consistant en un petit store roulant ou autre type de dispositif de commande mobile adapté, destiné à commander de manière variable la zone de l'ouverture à travers laquelle l'air pénètre dans le collecteur d'air, des moyens étant fournis pour pouvoir actionner le dispositif tandis que la palette est chargée et couverte de marchandises ou de matériel devant être transférés, facilitant ainsi l'alignement de la palette ou de la plateforme avec la surface de support par dessus laquelle la palette fonctionne, grâce à la commande séparée du volume d'air s'écoulant vers chacun des collecteurs d'air.

4. Palette ou plateforme selon l'une des revendications précédentes, dans laquelle de l'air sous pression fourni par une source externe peut pénétrer dans les conduits d'alimentation en air contenus à l'intérieur des poutres de support ou des éléments tubulaires fixés à la partie inférieure de la plaque rigide supportant la charge à travers un ou plusieurs orifices de tube, chacun d'entre eux ayant une forme conique le long de la ligne d'entrée de manière à ce que le tube amenant l'air sous pression depuis une source externe ait une forme conique concentrique similaire au tube d'entrée, coïncide avec le tube d'entrée et soit maintenu en place au moyen d'un dispositif de verrouillage amovible tandis que la charge est déplacée.

5. Palette ou plateforme selon l'une des revendications précédentes, présentant des dispositifs de fixation placés sur la palette en association avec les tubes d'entrée d'air, un chariot élévateur à fourche ou un tracteur analogue pouvant de ce fait être fixé de manière amovible à la palette ou la plateforme dans le but de guider ou de propulser la palette ou la plateforme de point en point ou de surface en surface.

6. Palette ou plateforme selon l'une des revendications précédentes, munie de collerettes flexibles en forme de plaque, faites de matière plastique, de caoutchouc ou de toute autre matière adaptée, leurs périmètres externes ayant une forme telle qu'elles sont disposées de manière concentrique à l'intérieur des faces internes des poutres de support ou des éléments tubulaires formant chacun des collecteurs d'air, et son périmètre externe étant fixé aux poutres ou éléments tubulaires, et une arête interne formée d'une bande étroite de matière résistante à l'abrasif définissant la zone de la surface réactive par dessus laquelle la palette est déplacée, qui pour le moment fait partie du collecteur d'air.

7. Palette ou plateforme selon l'une des revendications précédentes, sur laquelle est monté un cadre destiné à supporter un revêtement résistant à l'eau destiné à protéger la charge lorsqu'elle est en transit.

8. Palette ou plateforme selon l'une des revendications précédentes, sur laquelle est monté un conteneur rigide destiné à protéger de manière sûre les marchandises en transit.

9. Palette ou plateforme selon l'une des revendications précédentes, sur laquelle est monté un conteneur réfrigéré ou un conteneur isolé destiné à transporter de la nourriture réfrigérée ou congelée.

10. Dispositif de fixation combiné destiné à être connecté à une palette ou une plateforme selon l'une des revendications précédentes grâce à une alimentation externe en air sous pression, et aux moyens de guidage et de propulsion, les deux connexions pouvant de ce fait être réalisées depuis une position éloignée.
